# EUROPÄISCHE PATENTSCHRIFT

(11) **EP 3 132 065 B1**
(45) Veröffentlichungstag und Bekanntmachung des Hinweises auf die Patenterteilung: **04.07.2018**
(21) Anmeldenummer: 15717479.8
(22) Anmeldetag: 16.04.2015
(51) Int. Cl.: B22F 7/06, B22F 7/08, C22C 1/04, C22C 32/00, C22C 9/00, B32B 15/01, F16C 33/12

(54) **BLEIFREIER CUFE2P-GLEITLAGERWERKSTOFF MIT SPANBRECHER**
LEAD-FREE CUFE2P SLIDE BEARING MATERIAL HAVING A CHIP BREAKER
MATÉRIAU SANS PLOMB À BASE DE CUFE2P POUR PALIERS LISSES COMPRENANT UN BRISE-COPEAUX

(30) Priorität: 16.04.2014 DE 102014207332
(43) Veröffentlichungstag der Anmeldung: 22.02.2017
(73) Patentinhaber: Federal-Mogul Wiesbaden GmbH, 65201 Wiesbaden (DE)
(72) Erfinder: ANDLER, Gerd, 65307 Bad Schwalbach (DE); SCHMITT, Holger, 64319 Pfungstadt (DE); GEBER, Horst, 55411 Bingen am Rhein (DE)
(74) Vertreter: Mehler Achler
(86) Internationale Anmeldenummer: PCT/EP2015/058235
(87) Internationale Veröffentlichungsnummer: WO 2015/158807

(56) Entgegenhaltungen:
- DE-A1-102011 007 362
- DE-A1-102012 207 503
- US-A- 2 102 388

## Beschreibung

Die vorliegende Erfindung betrifft einen Gleitlagerwerkstoff mit einem Matrixwerkstoff, bestehend aus 2,1 - 2,6 Gew.-% Eisen, 0,05 - 0,2 Gew.-% Zink, 0,015 - 0,15 Gew.-% Phosphor, ≤ 0,03 Gew.-% Blei, ≤ 0,2 Gew.-% schmelzmetallurgisch bedingten Verunreinigungen und Rest Kupfer. Ferner betrifft die Erfindung einen Gleitlagerverbundwerkstoff mit einer Trägerschicht, einer Lagermetallschicht und mit einer auf der Lagermetallschicht aufgebrachten Gleitschicht sowie ein Gleitelement, insbesondere ein Radialgleitlager in Form einer Buchse oder Lagerschale.

Bleifreie Werkstoffe auf Kupfer-Eisen Phosphor-Basis, nachfolgend auch als CuFe2P-Legierung bezeichnet, sind allgemein seit langem bekannt und kommen seit einiger Zeit auch als Gleitlagerwerkstoffe, insbesondere als Gleitlagerverbundwerkstoffe für Buchsen oder Lagerschalen zur Anwendung. Beispielhaft wird auf die Schriften DE 10 2009 002 894 A1 und DE 10 2011 007 362 A1 aus dem Hause der Anmelderin verwiesen, in der der Werkstoff mit der eingangs genannten Zusammensetzung beschrieben ist.

Die Kupfer-Eisen-Phosphorlegierungen können sowohl gießtechnisch als auch sintertechnisch verarbeitet oder auf eine Trägerschicht mittels Walzplattieren aufgebracht werden. Sie zeichnen sich durch eine hohe Duktilität, Grundfestigkeit und -härte aus. Diese Parameter können durch thermomechanische Behandlung in einem weiten Bereich an die jeweiligen Anforderungen angepasst werden, so dass die Werkstoffe hinsichtlich ihrer Härte, Festigkeit und ihres Fressverhaltens an die aus Gründen mangelnder Umweltverträglichkeit zu ersetzenden Bleibronzen heranreichen. Allerdings sind die Werkstoffe unter anderem aufgrund ihrer hohen Grundfestigkeit und Härte deutlich schlechter zerspanbar als diese. Die schlechte Zerspanbarkeit hat kürzere Werkzeugstandzeiten bzw. schnell nachlassende Bearbeitungsgenauigkeit und Oberflächengüte zur Folge.

Das Deutsche Kupferinstitut untersucht unter anderem die Zerspanbarkeit von Kupferwerkstoffen systematisch und veröffentlicht die Ergebnisse in dem sogenannten Informationsdruck. Im Folgenden wird auf die 18. Auflage des Informationsdruckes (i.18) aus 2010 Bezug genommen. Die Zerspanbarkeit von Kupferwerkstoffen wird darin in drei verschiedene Hauptgruppen unterteilt. Dabei werden ähnlich zerspanbare Werkstoffe in einer Hauptgruppe zusammengefasst. Die Einteilung erfolgt bei den Kupferwerkstoffen vorrangig anhand der gebildeten Spanform sowie dem Verschleiß des Werkzeugs.

Die Zerspanungshauptgruppe I enthält Kupferwerkstoffe mit einer sehr guten Zerspanbarkeit und umfasst blei-, tellur- oder schwefellegierte Kupferwerkstoffe mit homogenem oder heterogenem Gefüge. Bei der Zerspanung kommt es zur Ausbildung von kurzen Bröckelspänen. Der Werkzeugverschleiß wird als gering eingestuft. Die Zerspanungshauptgruppe II enthält mäßig bis gut zerspanbare Kupferwerkstoffe. Verglichen mit den Werkstoffen der Zerspanungshauptgruppe I hat die Bearbeitung der Werkstoffe längere Späne zur Folge, im Allgemeinen mittellange Wendelspäne. Der Werkzeugverschleiß beim Bearbeiten von solchen Werkstoffen wird als "mittel" bezeichnet. In der Zerspanungshauptgruppe III sind die relativ zu den Gruppen I und II schwerer zerspanbaren Kupferwerkstoffe zusammengefasst. Bei deren Bearbeitung bilden sich lange Wendel-, Wirr- oder Bandspäne. Der Werkzeugverschleiß ist hoch.

Um eine weitere Differenzierung innerhalb der Hauptgruppen der empirisch gewonnenen Daten genormter Werkstoffe hinsichtlich deren Zerspanbarkeit zu ermöglichen, wird ferner ein Zerspanbarkeitsindex eingeführt. Dieser liegt bei den Werkstoffen der ersten Hauptgruppe zwischen 100 und 70, bei den Werkstoffen der zweiten Hauptgruppe zwischen 60 und 40 und bei den Werkstoffen der dritten Hauptgruppe zwischen 30 und 20.

CuFe2P-Legierungen sind in dem Informationsdruck i.18 des Deutschen Kupferinstitutes nicht aufgeführt.

Aufgabe der Erfindung ist es, einen Gleitlagerwerkstoff bereitzustellen, der ähnlich gute tribologische und mechanische Eigenschaften wie die bekannten CuFe2P-Legierungen, jedoch eine verbesserte Zerspanbarkeit und, aufgrund längerer Werkzeugstandzeiten, eine höhere Bearbeitungsgenauigkeit und Oberflächengüte aufweist. Eine weitere Aufgabe ist es gegenüber den bekannten Werkstoffen einen Werkstoff mit nochmals verminderter Fressneigung, insbesondere bei Mangelschmierung, bereitzustellen.

Gelöst wird diese Aufgabe mit einem Gleitlagerwerkstoff gemäß Patentanspruch 1.

Der erfindungsgemäße Gleitlagerwerkstoff weist einen Matrixwerkstoff aus 2,1 - 2,6 Gew.-% Eisen, 0,05 - 0,2 Gew.-% Zink, 0,015 - 0,15 Gew.-% Phosphor, ≤ 0,03 Gew.-% Blei, ≤ 0,2 Gew.-% schmelzmetallurgisch bedingten Verunreinigungen und Rest Kupfer mit wahlweise wenigstens einem Hartstoff und mit wahlweise wenigstens einem Festschmierstoff auf und ist gekennzeichnet durch wenigstens einen Zusatz, ausgewählt aus der Gruppe Tellur, Schwefel, Chrom und Zirkonium, der mit einer Gesamtmenge zwischen 0,01 und 2,0 Gew.% innerhalb des Matrixwerkstoffs dispergiert ist und in Form von Partikeln im Matrixwerkstoff vorliegt, wobei 90% der messbaren Partikel eine maximale Ausdehnung von 30 µm aufweisen. Es konnte festgestellt werden, dass sich durch den Zusatz von Tellur, Schwefel, Chrom und/oder Zirkonium als spanbrechende Elemente die Spanform und damit die Zerspanbarkeit auch dieser Matrixlegierungen verbessern lässt. Die Zugabe von Te, S, Cr und/oder Zr führt zu einer Absenkung der Bruchdehnung des Materials. Während CuFe2P-Legierungen ohne derartige Zusätze etwa 15% Bruchdehnung besitzt, kann diese durch den Einsatz von Tellur und/oder Schwefel auf bis zu 2% abgesenkt werden. Die Späne bilden deshalb keine langen Band- oder Fließspäne mehr aus, sondern zerbrechen zu feinen, nadelartigen Bruchstücken, die die Bearbeitung des Werkstoffes im Gegensatz zu langen Spänen nicht behindern. Insbesondere überrascht die Feststellung, dass die Zugabe von Tellur, Schwefel, Chrom und/oder Zirkonium zusätzlich die Fressneigung des Gleitlagerwerkstoffes signifikant verringert. Erfindungsgemäß ist der Zusatz insgesamt mit einem Anteil von 0,01 bis 2,0 Gew.-% bezogen auf den Gleitlagerwerkstoff innerhalb des Matrixwerkstoffs dispergiert. Bevorzugt ist der Zusatz insgesamt mit einem Anteil von 0,05 bis 1,0 Gew.-% und insbesondere bevorzugt insgesamt mit einem Anteil von 0,1 bis 0,3 Gew.-% innerhalb des Matrixwerkstoffs dispergiert.

Der Effekt der Absenkung der Bruchdehnung ist nur bis zu einem gewissen Grad erwünscht, weil eine zu geringe Bruchdehnung nur noch eine eingeschränkte Umformung des CuFe2P-Werkstoffes nach dem Gießen erlaubt, die aber bei der Herstellung eines Lagers erforderlich ist. Eine Bruchdehnung von 1% sollte deshalb keinesfalls unterschritten werden. Bei einem Anteil über 2 Gew.-% ist das nicht mehr sichergestellt und es könnten wesentliche Eigenschaften des Matrixwerkstoffes, wie Festigkeit, Umformbarkeit und dergleichen beeinträchtigt werden. Bei zu geringen Anteilen unterhalb 0,01 Gew.-% tritt der spanbrechende Effekt nicht genügend in Erscheinung. Insbesondere bei einer Zusatzmenge von 0,1 bis 0,3 Gew.-% ist der spanbrechende Effekt bereits sehr gut ausgeprägt, ohne dass die wesentlichen Eigenschaften des Matrixwerkstoffs signifikant verschlechtert wären, so dass dieser Mengenbereich einen sehr guten Kompromiss darstellt.

Die Zusätze Tellur, Schwefel, Chrom und/oder Zirkonium liegen innerhalb der CuFe2P-Matrix ungelöst und damit als separate Phase vor. Diese Phase ist überwiegend an den Korngrenzen des Matrixmaterials zu finden, wo sie bei starker lokaler mechanischer Belastung, wie bei der zerspanenden Bearbeitung, eine Rissumlenkung in dem Matrixgefüge bewirken, und somit schließlich das Abreißen des Spanes bei fortschreitender Belastung begünstigen. Erfindungsgemäß weisen 90% der messbaren Partikel im Matrixwerkstoff eine maximale Ausdehnung von 30 µm, besonders bevorzugt von 15 µm, auf. Als "messbar" werden alle Partikel bezeichnet, die eine Mindestgröße von 500 nm aufweisen. Die Mindestgröße dient ausdrücklich nur als "Cut-off" für den Nachweis und somit der Eindeutigkeit des Parameters.

Bilden die Zusätze Partikel in dieser Größenordnung, so ist der Zusatz derart in der CuFe2P-Matrix dispergiert, dass dieser die Zerspanbarkeit des Gleitlagerwerkstoffes signifikant steigert, während die weiteren mechanischen und tribologischen Eigenschaften des Matrixmaterials nicht oder nur sehr gering oder im Fall der Fressneigung sogar überraschend positiv beeinflusst werden. Dies wird darauf zurückgeführt, dass eine feinere Verteilung der Partikel eine großflächigere Störung der Korngrenzen des Matrixgefüges bewirkt und dass deshalb die Späne umso leichter brechen. Damit dies nicht zu einem zu hohen Festigkeitsverlust führt muss der Gehalt des spanbrechenden Zusatzes in den oben angegebenen Grenzen gehalten werden. Sind die Partikel hingegen größer als 15 µm und deshalb bei einem Anteil von 2 Gew.-% oder weniger nur vereinzelt lokal im Gefüge anzutreffen, wird es keinen ausreichenden spanbrechenden Effekt im gesamten Material geben.

In Folge der Dispersion des wenigstens einen Zusatzes innerhalb der Matrix weist der Gleitlagerwerkstoff vorteilhafterweise einen Zerspanbarkeitsindex von 100 - 70 auf. Mit einem Zerspanbarkeitsindex von 100 bis 70 ist der Gleitlagerwerkstoff der Zerspanungshauptgruppe I zugeordnet. Er bildet während einer spanenden Bearbeitung kurze Bröckelspäne aus, die die Bearbeitung des Werkstoffes nicht behindern, weil sie effektiv aus dem Bearbeitungsbereich entfernbar sind. Dies erhöht die Oberflächengüte, Bearbeitungspräzision und vermindert den Verschleiß an dem Werkzeug.

In einer weiteren vorteilhaften Ausführungsform tritt an dem Gleitlagerwerkstoff unterhalb eines Grenzwertes einer Last- und Gleitgeschwindigkeit von 720 MPa·m/s, vorzugsweise unterhalb 800 MPa·m/s, kein adhäsiver Verschleiß auf.

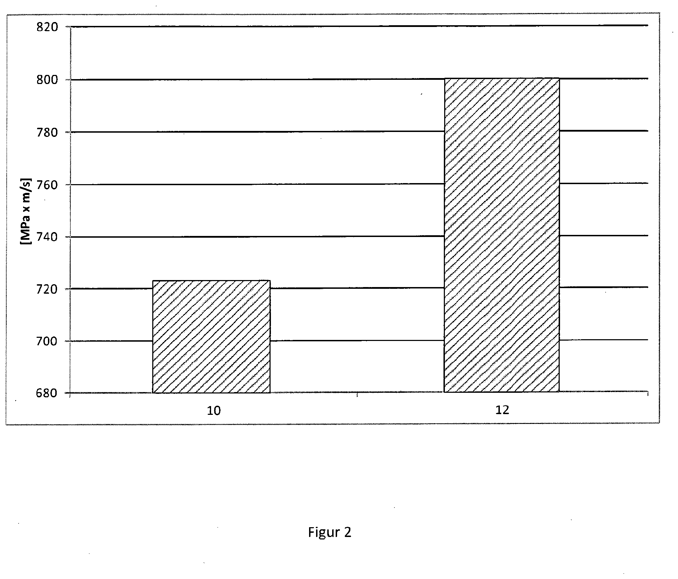

Messgröße der maximalen Last- und Gleitgeschwindigkeit wird in einem Fresstest ermittelt, wie er beispielsweise nachstehend unter Bezugnahme auf Figur 2 beschrieben wird. Der Grenz- oder Maximalwert von 720 MPa m/s, vorzugsweise 800 MPa m/s ist überraschenderweise signifikant höher als dem bekannten CuFe2P-Werkstoff. Der Zusatz von Tellur, Schwefel, Chrom und/oder Zirkonium im angegebenen Bereich hat mithin nicht nur eine spanbrechende Wirkung sondern zugleich eine verschleißmindernde bzw. schmierende Wirkung. Eine Schädigung des Werkstoffes durch Fressen tritt bei dem erfindungsgemäßen Lagerwerkstoff folglich erst bei höherer Belastung und/oder Relativgeschwindigkeiten der Gleitpartner auf, so dass der Gleitlagerwerkstoff einer Beanspruchung unter Mangelschmierung länger widerstehen kann.

Vorzugsweise weist der Gleitlagerwerkstoff desweiteren wenigstens einen Hartstoff ausgewählt aus der Gruppe bestehend aus Siliziden, Oxiden, Carbiden und Nitiriden, insbesondere AlN, Al2O3, SiO2, TiO2, ZrO2, Mo2C, MoSi2, SiC, B4C, Si3N4 und c-BN auf.

Vorteilhaft ist es ferner, wenn der Gleitlagerwerkstoff wenigstens einen Festschmierstoff ausgewählt aus der Gruppe bestehend aus h-BN und Graphite aufweist.

Der vorstehend beschriebene Gleitlagerwerkstoff kann als Massivwerkstoff in einem Gleitlagerelement, wie beispielsweise einer Buchse oder einer Lagerschale eingesetzt werden. Massivwerkstoff heißt, dass der Werkstoff eine ausreichende Festigkeit aufweist und somit selbsttragend ist. Gleichzeitig übernimmt der Werkstoff die Funktion des Lagermetalls.

Die Erfindung hat ferner einen Gleitlagerverbundwerkstoff mit einer Trägerschicht, einer Lagermetallschicht und mit einer auf der Lagermetallschicht aufgebrachten Gleitschicht zum Gegenstand. Die Lagermetallschicht besteht aus einem Gleitlagerwerkstoff der vorstehend beschriebenen Art.

Gleitlagerverbundwerkstoffe insbesondere in Form von zu Lagerschalen umgeformten Gleitlagerelementen werden im letzten Arbeitsgang durch Bohren auf ihr Endmaß kalibriert. Da Lagerschalen als Massenartikel grundsätzlich auch kostengünstig hergestellt werden müssen, besteht gerade bei diesem Bearbeitungsschritt Optimierungsbedarf. Beispielsweise werden viele gleiche Lagerschalen hintereinander aufgespannt und in einem Arbeitsgang gebohrt. Zudem wird eine hohe Schneid- und Vorschubgeschwindigkeit verlangt. Die Werkzeugstandzeiten müssen hoch sein, damit möglichst wenig Zeit für den Werkzeugwechsel und die anschließende Einrichtung verloren geht. Nicht zuletzt scheidet eine Nasszerspanung aus, weil Rückstände eines Kühl- und Schmiermittels mühsam von der Lagerschalenoberfläche entfernt werden müssten. Die Zerspanbarkeit ist deshalb gerade bei dieser Anwendung von größter Wichtigkeit.

Vorzugsweise ist die Trägerschicht in dem Gleitlagerverbundwerkstoff eine Stahlschicht.

Der sogenannte Stahlrücken gewährleistet aufgrund seiner Steifigkeit den erforderlichen Presssitz, so dass die Gefügestruktur des Lagermaterials unabhängig von Festigkeitsanforderungen eingestellt werden kann. Die beanspruchten Kupferlegierungen können folglich mit ihrer Gefügestruktur so gestaltet werden, dass sie hinsichtlich Festigkeit und Härte, sowie hinsichtlich ihrer tribologischen Eigenschaften, wie zum Beispiel Fressverhalten, in einem vergleichbaren Bereich wie die klassischen Bleibronzen liegen. Insgesamt wird der Einsatzbereich des Gleitlagerverbundwerkstoffes wesentlich erweitert. Auch bieten die Verbundwerkstoffe mit Stahlrücken Vorteile aufgrund ihres thermischen Ausdehnungskoeffizienten in Anwendungsfällen mit Stahlgehäusen.

Ziel bei den im Folgenden beschriebenen Herstellprozessen ist, dass im Endprodukt, exemplarisch an der Tellurphase beschrieben, die Phase des Zusatzes in einer definierten Größe vorliegt, was sich als vorteilhaft bezüglich des Fressverhaltens erwiesen hat. Auch wird auf eine abschließende Auslagerungswärmebehandlung verzichtet, bei der nicht - wie vorliegend - die Optimierung der Gleiteigenschaften sondern eine Erhöhung der Festigkeit bzw. der elektrischen Leitfähigkeit im Vordergrund steht.

Gemäß einer vorteilhaften Ausführungsform ist die Lagermetallschicht eine Sinterschicht.

Die Sinterschicht wird in Pulverform auf einem Stahlrücken aufgebracht. Der oder die Zusätze können bereits in dem vorlegierten Matrixmaterial enthalten sein und zusammen mit diesem pulverisiert werden oder es wird als separates Pulver zu dem Sinterpulver des Matrixmaterials zugegeben. Liegen die CuFe2P-Matrix und die Zusätze separat in Pulverform vor, können diese Pulver mit den entsprechenden Gewichtsverteilungen vermischt, und anschließend auf die Trägerschicht gesintert werden. Das auf dem Stahlrücken aufgebrachte Sinterpulver wird über 10 - 30 Minuten auf Sintertemperaturen zwischen 800°C und 1000°C unter Schutzgasatmosphäre erhitzt, verwalzt, nochmals bei gleicher Temperatur und ähnlichen Zeiten gesintert und je nach Härteanforderung mit einem weiteren Walzstich versehen. Insbesondere ist eine möglichst geringe bzw. keine Restporosität angestrebt. Weitere Verfahrensschritte sind nicht notwendig. Insbesondere kann auf Glühschritte verzichtet werden, da das Glühen gewissermaßen in den Sinterprozess integriert ist. Im Detail stellt sich der Sinterprozess wie folgt dar: Das Sinterpulver wird auf den Stahlträger in definierter Dicke aufgetragen; daran anschließend erfolgt ein erster Sinterprozess bei Temperaturen zwischen 800°C und 1000°C. Bevor ein zweiter Sinterprozess bei vergleichbaren Temperaturen erfolgt, wird die Sinterschicht mittels eines Walzvorganges bei Umformungen zwischen 10 - 30 % kompaktiert und damit verdichtet. Den Abschluss bildet ein finaler Walzschritt, mittels dem die gewünschten Festigkeiten und Dickentoleranzen des Bimetal-Bandes eingestellt werden. Bei beiden Sinterprozessen werden die Abkühlbedingungen derart gesteuert, dass die separat vorliegenden Tellurpartikel eine maximale Ausdehnung von 30 µm bevorzugt von 15 µm nicht überschreiten.

Gemäß einer alternativen Ausführungsform besteht zwischen der Lagermetallschicht und der Trägerschicht, gegebenenfalls über eine Zwischenschicht, eine Walzplattierverbindung.

Zuvor wird das Lagermetall in Form von Bandmaterial hergestellt, wahlweise wird die Zwischenschicht vorplattiert und anschließend das Lagermetall auf die Trägerschicht (mit oder ohne Zwischenschicht) ausgewalzt. Dabei erfolgt eine Umformung des Lagermetalls von 35 - 70%, was eine anschließende thermomechanische Behandlung erforderlich macht, um die mechanischen Eigenschaften des Lagermetalls auf das gewünschte Maß einzustellen. Diese beinhaltet ein erstes Glühen des Verbundes bei 550°C bis 700°C für 2 bis 5 Stunden, mindestens ein erstes Walzen des Verbundes, wobei ein Umformgrad von 20 bis 30 % erreicht wird, mindestens ein zweites Glühen bei 500°C - 600°C für mehr >1 h, gegebenenfalls ein zweites Walzen des Verbundes, wobei ein Umformgrad von max. 30 % erreicht wird mit einem anschließenden dritten Glühen bei Temperaturen >500°C über mindestens 1 h. Die Glühtemperatur und die Haltezeit bei dieser Temperatur wurden so gewählt, dass sich auch hier die Tellurphase im bereits erwähnten Größenbereich ausbildet. Es erfolgt keine Auslagerungswärmebehandlung, wodurch üblicherweise die Festigkeit und die elektrische Leitfähigkeit gesteigert wird. Da der oben beschriebenen dritten Glühung ein Kaltwalzen vorausgegangen ist, bewirkt diese Glühung neben der Einstellung der Größe der Tellurphase außerdem noch eine Rekristallisation des Matrixwerkstoffes.

Für die Zwischenschicht können Kupfer oder eine Kupferlegierung, beispielsweise eine Kupfer-Zink-Legierung oder eine Kupfer-Zinn-Legierung, eingesetzt werden.

In einer weiteren alternativen Ausführungsform ist die Lagermetallschicht eine Gießschicht. Das Begießen der Trägerschicht erfolgt typischerweise bei Temperaturen von 1000°C bis 1250°C. Auch hieran schließt sich eine thermomechanische Behandlung aus Walz- und Glühschritten zur Einstellung der gewünschten Materialeigenschaften, insbesondere z.B. der Tellurgrößenverteilung und eines damit verbesserten Fresswiderstandes, an. Nach dem Begießen eines Stahlbandes wird der Verbundwerkstoff bei Temperaturen > 650°C für mehrere Stunden (> 4 h) einer Homogenisierungsglühung unterzogen. Einem sich anschließenden Umformen des Verbundes zwischen 35 und 70 % in mehreren Walzstichen, schließt sich wieder eine Abschlussglühung an, die neben der Einstellung der Größe der Tellurphase außerdem noch eine Rekristallisation des Matrixwerkstoffes bewirkt. Auch hier finden wieder Temperaturen > 500°C bei einer Zeit > 1 h Anwendung.

Neben dem Gleitlagerwerkstoff und dem Gleitlagerverbundwerkstoff umfasst die Erfindung auch ein Gleitelement, insbesondere ein Gleitlager, das aus einem Gleitlagerwerkstoff der vorstehend beschriebenen Art besteht.

Von dem wie vorstehend beschrieben hergestellten Massiv- oder Gleitlagerverbundwerkstoff werden zur Herstellung von Gleitlagerelementen nach dem Längsteilen Platinen abgetrennt und die Platinen durch bekannte Umformschritte zu Gleitlagerelementen (z.B. Lagerschalen oder Buchsen) umgeformt. Als abschließender Prozess erfolgt eine spanende Bearbeitung zur Herstellung der Maßhaltigkeit der Lagerbohrung und gegebenenfalls das Aufbringen einer Gleitschicht.

Weitere Eigenschaften und Merkmale des erfindungsgemäßen Gleitlagerwerkstoffes werden anhand der nachfolgenden Zeichnungen erläutert. Es zeigen:
- Figur 1: ein Diagramm zur Illustration eines Testprogramms zur Ermittlung des Verschleißes eines Gleitlagers, und
- Figur 2: ein Diagramm ermittelter Verschleißwerte der erfindungsgemäßen und verschiedener anderer Kupferlegierungen.

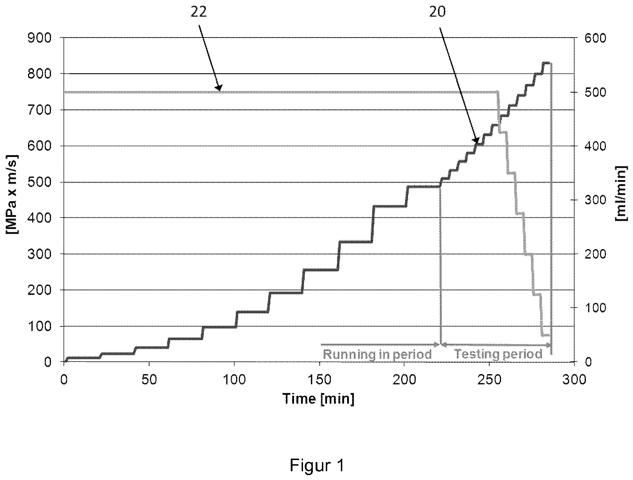

Ein erfindungsgemäßer Werkstoff und ein Vergleichswerkstoff wurden nach dem in Figur 1 illustrierten Schema einem Verschleißtest unterzogen. Der Prüfstand, auf dem die Messungen durchgeführt wurden, ist ähnlich einem Verbrennungsmotor mit original Kolben, Pleuelstange, Kurbelwelle und Gleitlagern ausgestattet. Während des Tests wird die Drehzahl der Kurbelwelle von 1900 Umdrehungen pro Minute auf maximal 8000 Umdrehungen pro Minute stufenweise gesteigert. Letzterer Wert entspricht einer maximalen Relativgeschwindigkeit zwischen der Kurbelzapfenoberfläche und der Gleitlageroberfläche von 19,7 m/s. Dabei wird das Gleitlager im großen Pleuelauge des Pleuels, welches zweiteilig in Form zweier Lagerschalen ausgebildet ist, mit einer sinusförmigen Last beaufschlagt. Gleichzeitig mit der Drehzahl steigert sich stufenweise auch die Last aufgrund der auftretenden Fliehkräfte. In dem Diagramm ist auf der y-Achse das Produkt aus der Last (in MPa) und der Relativgeschwindigkeit (im m/s) aufgetragen. Das Lager ist anfänglich mit einer konstanten Ölflussrate von 500 ml/min ölgeschmiert. Nach einer Dauer von 250 min, aber noch vor Erreichen der Maximallast, wird der Ölfluss schrittweise reduziert, während die Last bzw. Drehzahl schrittweise weiter gesteigert wird. Die maximale Last- und Gleitgeschwindigkeit, bei der das Lager unter diesen Bedingungen frisst, wird in jeweils wenigstens drei Versuchen pro Lagerwerkstoff unter gleichen Bedingungen gemessen und als Durchschnittswert in dem Diagramm gemäß Figur 2 aufgetragen.

In Figur 2 ist der so ermittelte Messwert der maximalen Last- und Gleitgeschwindigkeit als Indikator für das Fressverhalten in einem Balkendiagramm für zwei verschiedene CuFe2P-Gefügemodifikationen im Vergleich dargestellt. Der erste Balken 10 repräsentiert den Matrixwerkstoff mit 2,4 Gew.-% Fe, 0,15 Gew.-% P, 0,05 Gew.-% Zn, Rest Cu ohne Zusatz als Vergleichswerkstoff. Der zweite Balken 12 repräsentiert denselben Matrixwerkstoff mit einem Zusatz von 1 Gew.-% Tellur und repräsentiert somit den erfindungsgemäßen Gleitlagerwerkstoff.

Es wurde beim reinen Matrixwerkstoff 10 ein gemittelter Belastungsgrenzwert von 723 MPa·m/s gemessen. Der erfindungsgemäße Werkstoff mit Tellur brachte einen deutlich höheren gemittelten Belastungsgrenzwert ohne Fressen von 800 MPa·m/s hervor.

Die erfindungsgemäßen Gleitlagerwerkstoffe weisen also neben einer verbesserten Zerspanbarkeit gegenüber bekannten Gleitlagerwerkstoffen ohne Zusatz in überraschender Weise eine signifikant verringerte Fressneigung auf. Sie sind deshalb sogar ohne Festschmierstoffe für Anwendungen unter Mangelschmierung in besonderer Weise geeignet.

## Patentansprüche

1. Gleitlagerwerkstoff mit einem Matrixwerkstoff, bestehend aus 2,1 - 2,6 Gew.-% Eisen, 0,05 - 0,2 Gew.-% Zink, 0,015 - 0,15 Gew.-% Phosphor, ≤ 0,03 Gew.-% Blei, ≤ 0,2 Gew.-% schmelzmetallurgisch bedingten Verunreinigungen und Rest Kupfer, mit wahlweise wenigstens einem Hartstoff und mit wahlweise wenigstens einem Festschmierstoff, **gekennzeichnet durch,**
wenigstens einen Zusatz, ausgewählt aus der Gruppe Tellur, Schwefel, Chrom und Zirkonium, der mit einer Gesamtmenge zwischen 0,01 und 2,0 Gew.-% innerhalb des Matrixwerkstoffs dispergiert ist und in Form von Partikeln im Matrixwerkstoff vorliegt, wobei 90% der messbaren Partikel eine maximale Ausdehnung von 30 µm aufweisen.

2. Gleitlagerwerkstoff nach Anspruch 1,
**dadurch gekennzeichnet,**
**dass** 90% der messbaren Partikel des Zusatzes eine maximale Ausdehnung von 15 µm aufweisen.

3. Gleitlagerwerkstoff nach Anspruch 1 oder 2, **gekennzeichnet durch** wenigstens einen Hartstoff ausgewählt aus der Gruppe bestehend aus Siliziden, Oxiden, Carbiden und Nitiride, insbesondere AlN, Al₂O₃, SiO₂, TiO₂, ZrO₂, Mo₂C, MoSi₂, SiC, B₄C, Si₃N₄ und c-BN.

4. Gleitlagerwerkstoff nach einem der vorstehenden Ansprüche, **gekennzeichnet durch**
wenigstens einen Festschmierstoff ausgewählt aus der Gruppe bestehend aus h-BN und Graphite.

5. Gleitlagerverbundwerkstoff mit einer Trägerschicht, einer Lagermetallschicht und mit einer auf der Lagermetallschicht aufgebrachten Gleitschicht, **dadurch gekennzeichnet,**
**dass** die Lagermetallschicht aus einem Gleitlagerwerkstoff nach einem der Patentansprüche 1 bis 4 besteht.

6. Gleitlagerverbundwerkstoff nach Anspruch 5, **dadurch gekennzeichnet, dass** die Lagermetallschicht eine Sinterschicht ist.

7. Gleitlagerverbundwerkstoff nach Anspruch 5, **dadurch gekennzeichnet, dass** zwischen der Lagermetallschicht und der Trägerschicht gegebenenfalls über eine Zwischenschicht eine Walzplattierverbindung besteht.

8. Gleitlagerverbundwerkstoff nach Anspruch 5, **dadurch gekennzeichnet, dass** die Lagermetallschicht eine Gießschicht ist.

9. Gleitelement oder Gleitlager mit einem Gleitlagerwerkstoff nach einem der Patentansprüche 1 bis 4.

10. Gleitelement oder Gleitlager gefertigt aus einem Gleitlagerverbundwerkstoff nach einem der Patentansprüche 5 bis 8.

## Claims

1. Plain bearing material having a matrix material, comprising from 2.1 to 2.6% by weight of iron, from 0.05 to 0.2% by weight of zinc, from 0.015 to 0.15% by weight of phosphorus, ≤ 0.03% by weight of lead, ≤ 0.2% by weight of impurities which are caused by smelting metallurgy and balance copper, where applicable having at least one hard material and where applicable having at least one solid lubricant, **characterised by**
at least one additive which is selected from the group tellurium, sulphur, chromium and zirconium and which is dispersed at an overall quantity between 0.01 and 2.0% by weight within the matrix material and which is present in the form of particles in the matrix material, wherein 90% of the measurable particles have a maximum extent of 30 µm.

2. Plain bearing material according to claim 1, **characterised in that**
90% of the measurable particles of the additive have a maximum extent of 15 µm.

3. Plain bearing material according to claim 1 or 2, **characterised by** at least one hard material selected from the group comprising silicides, oxides, carbides and nitrides, in particular AlN, Al₂O₃, SiO₂, TiO₂, ZrO₂, Mo₂C, MoSi₂, SiC, B₄C, Si₃N₄ and c-BN.

4. Plain bearing material according to any one of the preceding claims, **characterised by**
at least one solid lubricant selected from the group comprising h-BN and graphites.

5. Plain bearing composite material having a carrier layer, a bearing metal layer and having a sliding layer which is applied to the bearing metal layer, **characterised in that**
the bearing metal layer comprises a plain bearing material according to any one of patent claims 1 to 4.

6. Plain bearing composite material according to claim 5, **characterised in that** the bearing metal layer is a sintered layer.

7. Plain bearing composite material according to claim 5, **characterised in that** between the bearing metal layer and the carrier layer there is optionally a roll-bonded cladding connection by means of an intermediate layer.

8. Plain bearing composite material according to claim 5, **characterised in that** the bearing metal layer is a cast layer.

9. Sliding element or plain bearing having a plain bearing material according to any one of claims 1 to 4.

10. Sliding element or plain bearing produced from a plain bearing composite material according to any one of patent claims 5 to 8.

## Revendications

1. Matériau pour paliers à glissement, comprenant un matériau formant matrice et composé de 2,1-2,6 % en poids de fer, de 0,05-0,2 % en poids de zinc, de 0,015-0,15 % en poids de phosphore, de ≤ 0,03 % en poids de plomb, de ≤ 0,2 % en poids d'impuretés dues à la fusion métallurgique, et de cuivre pour la part restante ; sélectivement, au moins un matériau dur ; et, sélectivement, au moins un matériau lubrifiant solide, **caractérisé par**
au moins un additif sélectionné au sein du groupe incluant le tellure, le soufre, le chrome et le zirconium, dispersé en une quantité totale comprise entre 0,01 et 2,0 % en poids à l'intérieur du matériau formant matrice, et présent sous forme de particules dans ledit matériau formant matrice, sachant que 90 % des particules mesurables ont une dimension maximale de 30 µm.

2. Matériau pour paliers à glissement, selon la revendication 1, **caractérisé par le fait**
**que** 90 % des particules mesurables de l'additif ont une dimension maximale de 15 µm.

3. Matériau pour paliers à glissement, selon la revendication 1 ou 2, **caractérisé par**
au moins un matériau dur sélectionné au sein du groupe constitué de siliciures, d'oxydes, de carbures et de nitrures, notamment d'AlN, d'Al₂O₃, de SiO₂, de TiO₂, de ZrO₂, de Mo₂C, de MoSi₂, de SiC, de B₄C, de Si₃N₄ et de c-BN.

4. Matériau pour paliers à glissement, selon l'une des revendications précédentes, **caractérisé par**
au moins un matériau lubrifiant solide sélectionné au sein du groupe constitué de h-BN et de graphite.

5. Matériau composite pour paliers à glissement, comprenant une couche de substrat, une couche métallique de support et une couche de glissement déposée sur ladite couche métallique de support, **caractérisé par le fait que** la couche métallique de support est constituée d'un matériau pour paliers à glissement conforme à l'une des revendications 1 à 4.

6. Matériau composite pour paliers à glissement, selon la revendication 5, **caractérisé par le fait**
**que** la couche métallique de support est une couche frittée.

7. Matériau composite pour paliers à glissement, selon la revendication 5, **caractérisé par**
la présence d'un assemblage plaqué par laminage, entre la couche métallique de support et la couche de substrat, le cas échéant avec interposition d'une couche intermédiaire.

8. Matériau composite pour paliers à glissement, selon la revendication 5, **caractérisé par le fait**
**que** la couche métallique de support est une couche déposée par coulée.

9. Elément de glissement ou palier à glissement, comportant un matériau pour paliers à glissement conforme à l'une des revendications 1 à 4.

10. Elément de glissement ou palier à glissement, fabriqué en un matériau composite pour paliers à glissement conforme à l'une des revendications 5 à 8.
